# EUROPEAN PATENT APPLICATION

(11) **EP 4 261 683 A1**
(43) Date of publication of application: **18.10.2023**
(21) Application number: 21914476.3
(22) Date of filing: 29.12.2021
(51) Int. Cl.: G06F 9/50

(54) **INFORMATION PROCESSING METHOD AND APPARATUS, DEVICE, AND STORAGE MEDIUM**

(30) Priority: 31.12.2020 CN 202011633633
(71) Applicant: Vivo Mobile Communication Co., Ltd., Dongguan, Guangdong 523863 (CN)
(72) Inventor: LV, Huazhang, Dongguan, Guangdong 523863 (CN); KE, Xiaowan, Dongguan, Guangdong 523863 (CN); BAO, Wei, Dongguan, Guangdong 523863 (CN)
(74) Representative: Murgitroyd & Company
(86) International application number: PCT/CN2021/142405
(87) International publication number: WO 2022/143744

(57) **Abstract**

Embodiments of this application provide an information processing method and apparatus, a device, and a storage medium. The method includes: obtaining description information of a computing power task and/or description information of a service; and performing a first operation according to the description information of the computing power task and/or the description information of the service, where the first operation includes at least one of the following: determining a first request; and sending the first request; where the first request is used to request computing power requirement information of the computing power task and/or computing power requirement information of the service; and the first request includes the description information of the computing power task and/or the description information of the service.

## Description

### CROSS-REFERENCE TO RELATED APPLICATION

This application claims priority to Chinese Patent Application No. 202011633633.8 filed in China on December 31, 2020, which is incorporated herein by reference in its entirety.

### TECHNICAL FIELD

This application pertains to the field of communication technologies, and specifically relates to an information processing method and apparatus, a device, and a storage medium.

### BACKGROUND

A current server query manner is mainly to select a server whose routing distance is the shortest or that is the closest to a terminal, and whether a computing power status of the server meets a computing power requirement of the terminal is not considered, and consequently, an optimal server selection result cannot be provided for the terminal.

### SUMMARY

Embodiments of this application provide an information processing method and apparatus, a device, and a storage medium, to resolve a problem of how to provide an optimal server for a terminal.

According to a first aspect, an information processing method is provided and is performed by a first communication device, including:
obtaining description information of a computing power task and/or description information of a service; and
performing a first operation according to the description information of the computing power task and/or the description information of the service, where the first operation includes at least one of the following:
   determining a first request; and
   sending the first request; where
   the first request is used to request computing power requirement information of the computing power task and/or computing power requirement information of the service; and
   the first request includes the description information of the computing power task and/or the description information of the service.

According to a second aspect, an information processing method is provided and is performed by a first communication device, including: obtaining first information, where the first information includes at least one of the following: a fourth request used to request to query a computing power server, and computing power status information of the server; and
performing a second operation according to the first information; where
the second operation includes at least one of the following:
   querying a first server according to the fourth request;
   determining a fifth request, where the fifth request is used to request to allocate or reserve a computing power resource for a computing power task and/or a service; and
   sending the fifth request; where
   the fourth request includes at least one of the following:
      computing power requirement information of the computing power task and/or computing power requirement information of the service;
      terminal location information;
      network-selected user plane information; and
      DNAI information.

According to a third aspect, an information processing method is provided and is performed by a third communication device, including:
obtaining a fifth request, where the fifth request is used to request to allocate or reserve a computing power resource for a computing power task and/or a service; and
performing a third operation according to the fifth request; where
the third operation includes at least one of the following:
   reserving or allocating a computing power resource of a candidate server; and
   sending a response message of the fifth request.

According to a fourth aspect, an information processing method is provided and is performed by a second communication device, including:
sending a second request, where the second request is used to request to query a computing power server, and
the second request includes description information of a computing power task and/or description information of a service.

According to a fifth aspect, an information processing apparatus is provided, including:
a first obtaining module, configured to obtain description information of a computing power task and/or description information of a service; and
a first processing module, configured to perform a first operation according to the description information of the computing power task and/or the description information of the service, where the first operation includes at least one of the following:
   determining a first request; and
   sending the first request; where
   the first request is used to request computing power requirement information of the computing power task and/or computing power requirement information of the service; and
   the first request includes the description information of the computing power task and/or the description information of the service.

According to a sixth aspect, an information processing apparatus is provided, including:
a third obtaining module, configured to obtain first information, where the first information includes at least one of the following: a fourth request used to request to query a computing power server, and computing power status information of the server; and
a second processing module, configured to perform a second operation according to the first information; where
the second operation includes at least one of the following:
   querying a first server according to the fourth request;
   determining a fifth request, where the fifth request is used to request to allocate or reserve a computing power resource for a computing power task and/or a service; and
   sending the fifth request; where
   the fourth request includes at least one of the following:
      computing power requirement information of the computing power task and/or computing power requirement information of the service;
      terminal location information;
      network-selected user plane information; and
      DNAI information.

According to a seventh aspect, an information processing apparatus is provided, including:
a fourth obtaining module, configured to obtain a fifth request, where the fifth request is used to request to allocate or reserve a computing power resource for a computing power task and/or a service; and
a third processing module, configured to perform a third operation according to the fifth request; where
the third operation includes at least one of the following:
   reserving or allocating a computing power resource of a candidate server; and
   sending a response message of the fifth request.

According to an eighth aspect, an information processing apparatus is provided, including:
a sending module, configured to send a second request, where the second request is used to request to query a computing power server, and the second request includes description information of a computing power task and/or description information of a service.

According to a ninth aspect, a first communication device is provided and includes a processor, a memory, and a program stored in the memory and executable on the processor, and when the program is executed by the processor, steps in the method described in the first aspect or the second aspect are implemented.

According to a tenth aspect, a second communication device is provided and includes a processor, a memory, and a program stored in the memory and executable on the processor, and when the program is executed by the processor, steps in the method described in the fourth aspect are implemented.

According to an eleventh aspect, a third communication device is provided and includes a processor, a memory, and a program stored in the memory and executable on the processor, and when the program is executed by the processor, steps in the method described in the third aspect are implemented.

According to a twelfth aspect, a readable storage medium is provided. The readable storage medium stores a program or an instruction, and when the program or the instruction is executed by a processor, steps in the method described in the first aspect, the second aspect, the third aspect, or the fifth aspect are implemented.

According to a thirteenth aspect, a program product is provided. The program product is stored in a non-volatile storage medium, and the program product is executed by at least one processor to implement steps in the method described in the first aspect, the second aspect, the third aspect, or the fourth aspect.

According to a fourteenth aspect, a chip is provided. The chip includes a processor and a communication interface, the communication interface is coupled to the processor, and the processor is configured to run a program or an instruction to implement the method described in the first aspect, the second aspect, the third aspect, or the fourth aspect.

In the embodiments of this application, a corresponding computing power requirement is obtained by analyzing description information of a computing power task and/or description information of a service that are sent by a terminal, and an optimal server is selected according to the computing power requirement to provide a service for a user.

### BRIEF DESCRIPTION OF DRAWINGS

FIG. 1 is a first flowchart of an information processing method according to an embodiment of this application;
FIG. 2 is a second flowchart of an information processing method according to an embodiment of this application;
FIG. 3 is a third flowchart of an information processing method according to an embodiment of this application;
FIG. 4 is a fourth flowchart of an information processing method according to an embodiment of this application;
FIG. 5 is a fifth flowchart of an information processing method according to an embodiment of this application;
FIG. 6 is a sixth flowchart of an information processing method according to an embodiment of this application;
FIG. 7 is a seventh flowchart of an information processing method according to an embodiment of this application;
FIG. 8 is an eighth flowchart of an information processing method according to an embodiment of this application;
FIG. 9 is a first schematic diagram of an information processing apparatus according to an embodiment of this application;
FIG. 10 is a second schematic diagram of an information processing apparatus according to an embodiment of this application;
FIG. 11 is a third schematic diagram of an information processing apparatus according to an embodiment of this application;
FIG. 12 is a fourth schematic diagram of an information processing apparatus according to an embodiment of this application;
FIG. 13 is a schematic diagram of a first communication device according to an embodiment of this application;
FIG. 14 is a schematic diagram of a second communication device according to an embodiment of this application; and
FIG. 15 is a schematic diagram of a third communication device according to an embodiment of this application.

### DESCRIPTION OF EMBODIMENTS

A computing power network, also referred to as a computing power perceiving network, is a new network architecture that is proposed to cope with the trend of converged development of a computing network. Based on ubiquitous network connections, dynamically distributed computing resources are interconnected and scheduled in a coordinated manner by using multi-dimensional resources such as network, storage, and computing power, so that a large quantity of applications can invoke computing resources in different places on demand and in real time, to implement global optimization of connections and computing power in the network and provide consistent user experience.

Currently, a conventional Internet hypothesis is a static server (server) plus a mobile client (client), a service is based on an Internet Protocol (Internet Protocol, IP) addressing manner resolved by a domain name system (Domain Name System, DNS), and a network mode of a Transmission Control Protocol (Transmission Control Protocol, TCP)/Transport Layer Security (Transport Layer Security, TLS) session is established. In a sixth-generation mobile communication (the 6th generation mobile communication, 6G) era, a network needs to perceive, interconnect, and collaborate ubiquitous computing power and services, and an existing server selection manner cannot satisfy a requirement of a communication system.

The following clearly and completely describes the technical solutions in the embodiments of this application with reference to the accompanying drawings in the embodiments of this application. Apparently, the described embodiments are some rather than all of the embodiments of this application. Based on the embodiments of this application, all other embodiments obtained by a person of ordinary skill in the art without creative efforts shall fall within the protection scope of this application.

Terms "first" and "second" in the specification and claims of this application are used to distinguish between similar objects, and do not need to be used to describe a specific order or sequence. It should be understood that data used in this way may be interchangeable in an appropriate case, so that the embodiments of this application can be implemented in a sequence other than those shown or described herein, and objects distinguished by "first" and "second" are generally of a same type, and a quantity of objects is not limited. For example, there may be one or more first targets. In addition, in the specification and the claims, "and/or" represents at least one of connected objects, and the character "/" generally represents an "and/or" relationship between associated objects.

It should be noted that the technology described in the embodiments of this application is not limited to a Long Term Evolution (Long Time Evolution, LTE)/LTE-advanced (LTE-Advanced, LTE-A) system, and may also be used in various wireless communication systems, for example, Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application are often used interchangeably. The described technology may be used in the foregoing system and radio technology, and may also be used in another system and radio technology. However, a New Radio (New Radio, NR) system is described below as an example, and the term NR is used in most of the descriptions, although these technologies can also be used in an application other than an application of the NR system, for example, a sixth (6^{th} Generation, 6G) communication system.

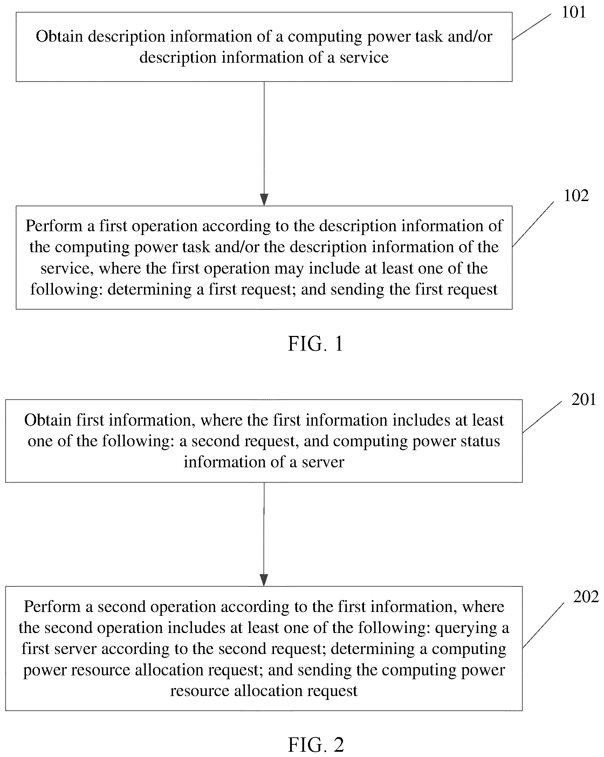

FIG. 1 is a block diagram of a wireless communication system to which an embodiment of this application is applicable. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (Vehicle User Equipment, VUE), or pedestrian user equipment (Pedestrian User Equipment, PUE). The wearable device includes a band, a headset, eyeglasses, or the like. It should be noted that a specific type of the terminal 11 is not limited in this embodiment of this application. The network side device 12 may be a base station or a core network. The base station may be referred to as a NodeB, an evolved Node B, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a WiFi node, a transmitting receiving point (Transmitting Receiving Point, TRP), or another suitable term in the field provided that a same technical effect is achieved. The base station is not limited to a specific technical term. It should be noted that, in this application, only a base station in an NR system is used as an example, but a specific type of the base station is not limited.

In the embodiments of this application, optionally, obtaining may be understood as obtaining from a configuration, receiving, receiving by using a request, obtaining through self-learning, obtaining through derivation based on information that is not received, or obtaining after processing based on received information. This may be specifically determined based on an actual requirement, and is not limited in the embodiments of this application. For example, when specific capability indication information sent by a device is not received, it may be deduced that the device does not support the capability.

Optionally, sending may include broadcasting, broadcasting in a system message, and returning after responding to a request.

In an embodiment of this application, a data channel may include but is not limited to one of the following: a packet data unit (Packet Data Unit, PDU) session, a PDN connection, a quality of service (Quality of Service, QoS) flow, a bearer, and an Internet protocol security (Internet Protocol Security, IPsec) channel, where the bearer may be an evolved radio access bearer (Evolved Radio Access Bearer, E-RAB), an evolved radio access bearer (Evolved Radio Access Bearer, RAB), a data radio bearer (Data Radio Bearer, DRB), a signaling radio bearer (signaling radio bearers, SRB), or the like.

In an optional embodiment of this application, a communication device may include at least one of the following: a communication network element and a terminal.

In an embodiment of this application, the communication network element may include at least one of the following: a core network element and a radio access network element.

In the embodiments of this application, a core network element (CN network element) may include but is not limited to at least one of the following: a core network device, a core network node, a core network function, a core network element, a mobility management entity (Mobility Management Entity, MME), an access mobility management function (Access Management Function, AMF), a session management function (Session Management Function, SMF), a user plane function (User Plane Function, UPF), a serving gateway (serving GW, SGW), a PDN gateway (PDN Gate Way, PDN gateway), a policy control function (Policy Control Function, PCF), a policy and charging rules function unit (Policy and Charging Rules Function, PCRF), a general packet radio service (General Packet Radio Service, GPRS) serving GPRS support node (Serving GPRS Support Node, SGSN), a gateway GPRS support node (Gateway GPRS Support Node, GGSN), unified data management (Unified Data Management, UDM), unified data repository (Unified Data Repository, UDR), a home subscriber server (Home Subscriber Server, HSS), an application function (Application Function, AF), and a centralized network configuration (Centralized network configuration, CNC).

In the embodiments of this application, a radio access network (Radio Access Network, RAN) network element may include but is not limited to at least one of the following: a radio access network device, a radio access network node, a radio access network function, a radio access network unit, a third generation partnership project (Third Generation Partnership Project, 3GPP) radio access network, a non-3GPP radio access network, a centralized unit (Centralized Unit, CU), a distributed unit (Distributed Unit, DU), a base station, an evolved NodeB (evolved NodeB, eNB), a 5G base station (gNB), a radio network controller (Radio Network Controller, RNC), a NodeB (NodeB), a non-3GPP interworking function (Non-3GPP Inter Working Function, N3IWF), an access control (Access Controller, AC) node, an access point (Access Point, AP) device, a wireless local area network (Wireless Local Area Networks, WLAN) node, and an N3IWF.

In an optional embodiment of the present invention, computing power includes a computing speed or a computing capability. For example, a computing speed or a computing capability of a server, a central processing unit (Central Processing Unit, CPU), a graphics processing unit (Graphics Processing Unit, GPU), a terminal, or the like is described, and is generally represented by a quantity of computing times per second.

In an optional embodiment of the present invention, a computing power requirement includes a computing power resource that needs to be consumed to complete a computing power task.

In an optional embodiment of the present invention, the computing power task includes a to-be-completed computing task that needs to consume specific computing power resources.

In an optional embodiment of the present invention, a computing power state includes at least one of the following: a computing power use status, a computing power remaining status, or a computing power available status, for example, a computing power use status, a computing power available status, or a computing power remaining status of a device such as a server, a terminal, a CPU, or a GPU. The computing power remaining status or the computing power available status may be available computing power. The computing power use status may be a computing power use ratio.

In an optional embodiment of the present invention, the computing power may be represented by at least one of the following:
a floating point computing amount (flops);
a quantity of processor cores;
a multiply accumulate operation (Multiply Accumulate, MAC);
a quantity of graphics processor cores;
a dominant frequency of a processor/graphics processor;
a multiple frequency of a processor/graphics processor;
an integer unit of a processor/graphics processor;
a floating point unit of a processor/graphics processor; and
an output speed of a computed hash function.

In an optional embodiment of the present invention, computing power requirement information includes at least one of the following:
a required floating point computing amount;
a quantity of required processor cores;
a required multiply accumulate operation;
a quantity of required graphics processor cores;
a required dominant frequency of a processor/graphics processor;
a required multiple frequency of a processor/graphics processor;
a required integer unit of a processor/graphics processor;
a required floating point unit of a processor/graphics processor; and
a required output speed of a computed hash function.

In an optional embodiment of the present invention, description information of a computing power task and/or a service includes at least one of the following:
a computing power task ID and/or a service ID, an FQDN, a source IP address, a target IP address, a source port, a destination port, a protocol number, a source MAC address, a target MAC address identifier, a packet detection rule (Packet Detection Rule, PDR), and a data network name (Data Network Name, DNN); and
application description information Application descriptors (including OSid and/or OSAppid), and a packet detection rule PDR.

In an optional embodiment of the present invention, the computing power status information includes at least one of the following:
a computing power remaining status or a computing power available status;
total computing power;
a computing power use status;
a predicted future computing power use status; and
a computing power use status in a past first period of time.

In an optional embodiment of the present invention, the server includes one of the following:
a computing power server, where in one implementation, the computing power server includes a server capable of providing a computing resource and/or a computing capability;
an edge application server (EAS);
an application server;
a computing resource server;
a computing capability server;
an edge computing resource server;
an edge computing capability server; and
an edge computing power server.

In an optional embodiment of the present invention, the first communication device includes one of the following:
a computing power perceiving network element, for example, a network data analytics function (Network Data Analytics Function, NWDAF) network element and an edge enabler server (edge enabler server, EES);
a server query and resolving network element, for example, a local DNS resolver (local DNS resolver, LDNSR) and an edge enabler server (edge enabler server, EES);
a computing power resource allocation network element (for example, a computing power resource allocation server (for example, an edge configuration server (Edge Configuration Server, ECS))); and
a server query network element, for example, a DNS server (DNS server).

In an optional embodiment of the present invention, the second communication device includes one of the following:
a terminal;
a computing resource client (including an edge computing resource client);
a computing capability client (including a computing capability client);
a computing resource enabler client (including a computing resource enabler client);
a computing capability enabler client (including a computing capability enabler client); and
an enabler client (including an edge enabler client).

In an optional embodiment of the present invention, the third communication device includes one of the following:
a computing power perceiving network element, for example, a network data analytics function (Network Data Analytics Function, NWDAF) network element;
an enabler server (Enabler Server, ES) (including an edge enabler server (Edge Enabler Server, EES)); and
a computing power enabler server (including an edge a computing power enabler server).

In an optional embodiment of the present invention, the fourth communication device includes one of the following:
a computing power server;
an edge application server; and
an application server.

In an implementation, the computing power server includes a server capable of providing a computing resource and/or a computing capability.

In an implementation, the computing power server includes an edge computing power server.

In an implementation, the application server includes an edge application server.

In an implementation, the computing resource server includes an edge computing resource server.

In an implementation, the computing capability server includes an edge computing capability server.

In an optional embodiment of the present invention, the index information of the server includes at least one of the following:
internet Protocol (Internet Protocol, IP) address information;
port number information;
a uniform resource locator (uniform resource locator, URL);
a fully qualified domain name (Fully Qualified Domain Name, FQDN); and
a server identifier (Identifier, ID).

An embodiment of this application provides an information processing method that is performed by a first communication device.

As shown in FIG. 1, the method includes step 101 and step 102.

Step 101: obtain description information of a computing power task and/or description information of a service.

Step 102: perform a first operation according to the description information of the computing power task and/or the description information of the service, where the first operation may include at least one of the following: determining a first request; and sending the first request.

The first request is used to request computing power requirement information of the computing power task and/or computing power requirement information of the service, and the first request may include the description information the computing power task and/or the description information of the service.

In an implementation, the first operation is performed when a first condition is satisfied, and the first condition may include at least one of the following:
(1) that a second request is obtained from a second communication device, and the second request is used to request to query a computing power server.
(2) that a third request is obtained from the second communication device.

In an implementation, the third request is used to request to allocate computing power to the computing power task and/or the service.

In an implementation, the description information of the computing power task and/or the description information of the service may be included in the second request or the third request.

In an implementation, the second request may be a domain name system (Domain Name System, DNS) query request.

In an implementation, after the step of sending a first request, the first operation may further include at least one of the following:
(1) obtaining the computing power requirement information of the computing power task and/or the computing power requirement information of the service;
(2) determining a fourth request according to the computing power requirement information of the computing power task and/or the computing power requirement information of the service, where the fourth request is used to request to query a computing power server; and
(3) sending the fourth request.

The fourth request includes at least one of the following:
(a) the computing power requirement information of the computing power task and/or the computing power requirement information of the service;
(b) terminal location information;
(c) network-selected user plane information; and
(d) data network access identifier (Data Network Access Identifier, DNAI) information.

In an implementation, the fourth request may be included in an ECS Option (edns-client-subnet).

In an implementation, the first communication device may request to obtain computing power status information of the server through subscription. Optionally, the first communication device may subscribe to the computing power server (EAS) for the computing power status information.

In an implementation, the first operation may further include:
(1) Obtaining index information of a first server from a device that previously sent a second query request.

The first server is a candidate server before a computing power resource is successfully allocated or reserved, and is the first server after the computing power resource is successfully allocated or reserved.

(2) Sending the index information of the first server to the second communication device.

It may be understood that index information of different types of servers may include the foregoing content, that is, the index information is common to different types of servers.

In an implementation, the first server can satisfy at least one of the following:
(1) that the first server can satisfy the second request or the fourth request.
(2) that the first server satisfies a fifth request, where the fifth request is used to request to allocate or reserve a computing power resource for the computing power task and/or the service.
(3) that a physical distance between the first server and the second communication device is the shortest.
(4) that a routing distance between the first server and the second communication device is the shortest or a delay between the first server and the second communication device is the smallest.
(5) that an available computing power status of the first server can satisfy the computing power requirement information of the computing power task and/or the computing power requirement information of the service.

The available computing power status of the first server is the total computing power of the first server minus used computing power.

In an implementation, the fifth request is sent to a fourth communication device.

In an implementation, the method further includes: sending the fifth request to the first server. After the sending the fifth request to the first server, the first operation may further include: receiving a response message of the fifth request.

In an implementation, a computing power resource allocation response includes a resource allocation success indication.

In another implementation, the computing power resource allocation response includes a resource allocation failure indication.

In an implementation, after the computing power resource allocation success indication is received, the first operation may further include at least one of the following:
(1) Sending a server query response, that is, sending a response message of the second request and/or the fourth request.

In an implementation, the server query response is sent to the terminal, an LDNSR, and/or an EES.

(2) Sending server index information.

In an implementation, the server index information is sent to a session management function (Session Management Function, SMF) network element.

(3) Resending the server query request, that is, resending the second request and/or the fourth request.

In another implementation, computing power server information is sent to a third communication device.

In an implementation, the fifth request includes at least one of the following:
(1) index information of a candidate server;
(2) a resource allocation request identifier;
(3) a computing power resource status occupied in the request;
(4) computing power task completion time and/or service completion time;
(5) computing power task start time and/or service start time; and
(6) the description information of the computing power task and/or the description information of the service.

In an implementation, in a case that the candidate server returns a computing power resource allocation success response, the candidate server may be converted into the first server.

In this embodiment of this application, in an original domain name resolution system and a process, a computing power dimension is added, and a computing power task of a user or a service and a computing power requirement are considered. When the user initiates a server query process, the network may obtain a computing power requirement of the user according to the computing power task of the user or a service requirement, and use an analysis result as one of important parameters for server query and resolution. The first communication device may select an optimal computing power server or edge computing power server by comprehensively considering a current location of the user, a task of the user, or the computing power requirement of the service to provide the service for the user, to realize the best server that comprehensively considers computing power guarantees and whose routing distance is the shortest. In addition, the network may reserve or preempt a resource on a computing power server in advance according to the computing power task of the user or the computing power requirement of the service, to ensure normal running of the service; and may also reselect a computing power server for the user in a case that computing power resources are insufficient.

In addition, the network may also subscribe to a computing power status of the server, to determine whether a computing power requirement of the server satisfies or matches a user task or a service.

As shown in FIG. 2, an embodiment of this application provides an information processing method that is performed by a first communication device and includes step 201 and step 202.

A server can provide computing power for a computing power task or a service.

Step 201: obtain first information, where the first information includes at least one of the following: a fourth request used to request to query a computing power server, and computing power status information of the server.

Step 202: perform a second operation according to the first information.

The second operation includes at least one of the following:
(1) querying a first server according to the fourth request;
(2) determining a fifth request, where the fifth request is used to request to allocate or reserve a computing power resource for a computing power task and/or a service; and
(3) sending the fifth request; where
the fourth request includes at least one of the following:
(1) computing power requirement information of the computing power task and/or computing power requirement information of the service;
(2) terminal location information;
(3) network-selected user plane information; and
(4) DNAI information.

In an implementation, the second operation may further include: sending index information of the first server to a second communication device.

In an implementation, the first server satisfies at least one of the following:
(1) that the first server satisfies the fourth request;
(2) that the first server satisfies the fifth request;
(3) that a physical distance between the first server and the first communication device is the shortest; and
(4) that a routing distance between the first server and the first communication device is the shortest or a delay between the first server and the first communication device is the smallest.

In an implementation, that the first server satisfies the fourth request includes at least one of the following:
(1) That an available computing power status of the first server can satisfy the computing power requirement information of the computing power task and/or the computing power requirement information of the service.

The available computing power status of the first server includes the total computing power of the first server minus used computing power.

(2) That a resource allocation request is sent to the first server, and a computing power resource allocation success response returned by the first server is obtained.

In an implementation, that the first server can satisfy the fifth request includes:
that a resource allocation request is sent to the first server, and a computing power resource allocation success response returned by the first server is obtained.

In an implementation, the fifth request may include at least one of the following:
(1) index information of a candidate server;
(2) a resource allocation request identifier;
(3) a computing power resource status occupied in the request;
(4) computing power task completion time and/or service completion time;
(5) computing power task start time and/or service start time; and
(6) description information of the computing power task and/or description information of the service.

In this embodiment of this application, in an original domain name resolution system and a process, a computing power dimension is added, and a computing power task of a user or a service and a computing power requirement are considered. When the user initiates a server query process, the network may obtain a computing power requirement of the user according to the computing power task of the user or a service requirement, and use an analysis result as one of important parameters for server query and resolution. The first communication device may select an optimal computing power server or edge computing power server by comprehensively considering a current location of the user, a task of the user, or the computing power requirement of the service to provide the service for the user, to realize the best server that comprehensively considers computing power guarantees and whose routing distance is the shortest. In addition, the network may reserve or preempt a resource on a computing power server in advance according to the computing power task of the user or the computing power requirement of the service, to ensure normal running of the service; and may also reselect a computing power server for the user in a case that computing power resources are insufficient.

In addition, the network may also subscribe to a computing power status of the server, to determine whether a computing power requirement of the server satisfies or matches a user task or a service.

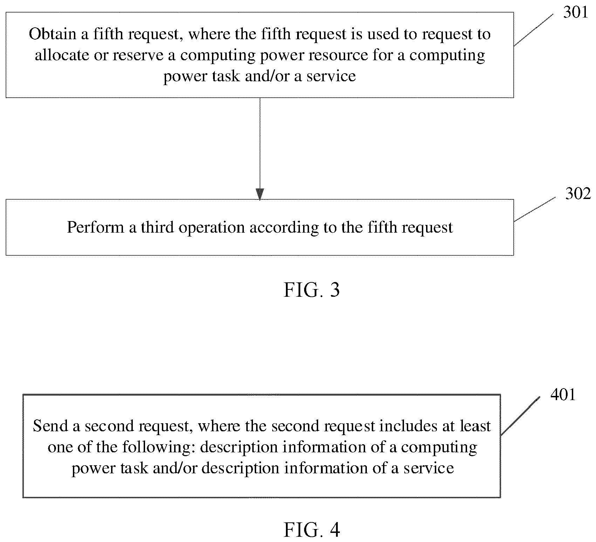

As shown in FIG. 3, an embodiment of this application provides an information processing method that is performed by a third communication device. The method includes step 301 and step 302.

Step 301: obtain a fifth request, where the fifth request is used to request to allocate or reserve a computing power resource for a computing power task and/or a service.

Step 302: perform a third operation according to the fifth request.

The third operation includes at least one of the following:
(1) reserving or allocating a computing power resource of a candidate server; and
(2) a response message of the fifth request.

In an implementation, the computing power resource allocation response includes a resource allocation success indication.

In another implementation, the computing power resource allocation response includes a resource allocation failure indication.

In an implementation, the fifth request may include at least one of the following:
(1) index information of a candidate server;
(2) a resource allocation request ID;
(3) a computing power resource status occupied in the request;
(4) computing power task completion time and/or service completion time;
(5) computing power task start time and/or service start time; and
(6) description information of the computing power task and/or description information of the service.

In this embodiment of this application, in an original domain name resolution system and a process, a computing power dimension is added, and a computing power task of a user or a service and a computing power requirement are considered. When the user initiates a server query process, the network may obtain a computing power requirement of the user according to the computing power task of the user or a service requirement, and use an analysis result as one of important parameters for server query and resolution. In this way, a first communication device may select an optimal computing power server or edge computing power server by comprehensively considering a current location of the user, a task of the user, or the computing power requirement of the service to provide the service for the user, to realize the best server that comprehensively considers computing power guarantees and whose routing distance is the shortest. In addition, the network may reserve or preempt a resource on a computing power server in advance according to the computing power task of the user or the computing power requirement of the service, to ensure normal running of the service; and may also reselect a computing power server for the user in a case that computing power resources are insufficient.

In addition, the network may also subscribe to a computing power status of the server, to determine whether a computing power requirement of the server satisfies or matches a user task or a service.

As shown in FIG. 4, an embodiment of this application provides an information processing method that is performed by a second communication device and includes step 401.

Step 401: send a second request, where the second request is used to request to query a computing power server, and the second request includes description information of a computing power task and/or description information of a service.

In this embodiment of this application, in an original domain name resolution system and a process, a computing power dimension is added, and a computing power task of a user or a service and a computing power requirement are considered. When the user initiates a server query process, the network may obtain a computing power requirement of the user according to the computing power task of the user or a service requirement, and use an analysis result as one of important parameters for server query and resolution. In this way, a first communication device may select an optimal computing power server or edge computing power server by comprehensively considering a current location of the user, a task of the user, or the computing power requirement of the service to provide the service for the user, to realize the best server that comprehensively considers computing power guarantees and whose routing distance is the shortest. In addition, the network may reserve or preempt a resource on a computing power server in advance according to the computing power task of the user or the computing power requirement of the service, to ensure normal running of the service; and may also reselect a computing power server for the user in a case that computing power resources are insufficient.

In addition, the network may also subscribe to a computing power status of the server, to determine whether a computing power requirement of the server satisfies or matches a user task or a service.

Implementations of the embodiments of this application are described below with reference to Embodiment 1 to Embodiment 4.

Embodiment 1: a server query and resolving network element (center) + a server query network element.

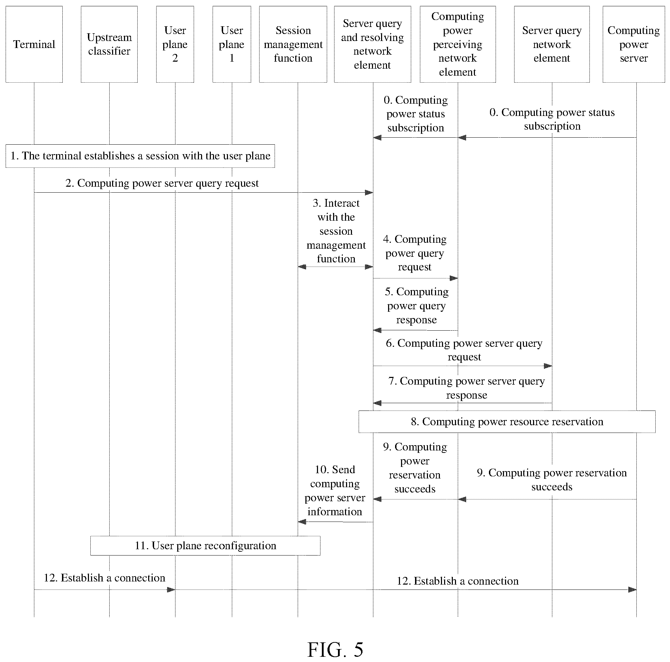

As shown in FIG. 5, specific steps are as follows:
Step 0: a computing power perceiving network element subscribes to a computing power server for computing power status information, and a server query and resolving network element subscribes to the computing power perceiving network element for computing power status information of each computing power server.
Step 1: a terminal establishes a session with a user plane.
Step 2: the terminal sends a server query request (a second request) to the server query and resolving network element.
Step 3: the server query and resolving network element interacts with a session management function (for example, a session management function (Session Management Function, SMF)), and obtains one or more of the following from the session management function: terminal location information, network-selected user plane information, and data network access identifier (DN Access Identifier, DNAI) information.
Step 4: the server query and resolving network element sends a computing power query request (a third request) to a computing power perceiving network element.

The power query request is used to query a computing power requirement corresponding to a computing power task or a service.

Optionally, the computing power query request includes at least one of the following: description information of the computing power task.

Optionally, the description information of the computing power task includes at least one of the following: description information of the service.

Optionally, the description information of the service includes at least one of the following: (1) a fully qualified domain name (Fully Qualified Domain Name, FQDN); (2) an IP address (3) a port number; (4) application description information; (5) a service type.

Step 5: the computing power perceiving network element returns a computing power query response according to the computing power query request.

The computing power query response includes computing power requirement information corresponding to the computing power task and/or the service.

The server query and resolving network element generates auxiliary information (for example, ECS option) used to query the server.

Optionally, the auxiliary information used to query the server may include one or more of the following:
(1) the computing power requirement information corresponding to the computing power task and/or the service;
(2) terminal location information;
(3) network-selected user plane information; and
(4) data network access identifier (DNAI) information.

Step 6: the server query and resolving network element sends a computing power server query request to the server query network element (for example, a central server query network element).

The computing power server query request (a fourth request) includes query auxiliary information.

Optionally, the query auxiliary information includes one or more of the following:
(1) a computing power requirement corresponding to the computing power task and/or the service;
(2) terminal location information;
(3) network-selected user plane information; and
(4) data network access identifier information.

The server query and resolving network element performs, according to the query auxiliary information, related operations for querying a computing power server.

Optionally, the related operations for querying the computing power server include one or more of the following:
(1) confirming a first server, where the first server is a computing power server that satisfies a requirement of the query auxiliary information; and
(2) returning address information of the first server.

It may be understood that the first server is a candidate server before a computing power resource is successfully allocated or reserved, and is the first server after the computing power resource is successfully allocated or reserved.

Step 7: the server query network element (for example, the central server query network element) sends a server query response to the server query and resolving network element.

The server query response includes address information of the first server that satisfies the query auxiliary information.

The address information of the first server includes one or more of the following:
(1) IP address information of the first server;
(2) port number information of the first server; and
(3) a uniform resource locator (Uniform Resource Locator, URL) of the first server.

In an implementation, that the first server satisfies a requirement of the query auxiliary information of the server includes: a computing power status of the first server can support a computing power requirement of the computing power task.

In another implementation, that the first server satisfies a requirement of the query auxiliary information of the server includes: a computing power status of the first server can support a computing power requirement of the computing power task and/or the service; and a location of the first server satisfies a location of a terminal (for example, the first server is closest to the location of the terminal or a path between the first server and the terminal is optimal).

Step 8: the server query and resolving network element and the computing power perceiving network element send a fifth request to the computing power server or a computing power resource allocation server, where the fifth request is used to request to allocate or reserve a computing power resource to a computing power task and/or a service.

In an implementation, the computing power resource allocation server is the selected first server.

Optionally, the fifth request includes one or more of the following: (1) index information of the first server (an IP address, an ID, a port number, an FQDN, a URL, and the like); (2) a computing power of the computing power task and/or the service.

Step 9: the first server sends a computing power resource allocation response to the computing power perceiving network element and the server query and resolving network element.

The computing power resource allocation response includes: a computing power resource allocation success (or referred to as a computing power resource reservation success), or a computing power resource allocation failure (or referred to as a computing power resource reservation failure).

In an implementation, if the computing resource is successfully allocated and the candidate server is converted into the first server, step 10 is performed.

In another implementation, if the computing resource fails to be allocated, step 4 to step 8 are repeatedly performed.

Step 10: the server query and resolving network element sends address information of the first server to a session management function.

Step 11: the session management function reconfigures a user plane according to the address information of the first server.

Step 12: the terminal establishes an IP connection to the first server.

Embodiment 2: a server query and resolving network element + (multiple) (local) server query and resolving network elements + (multiple) (local) server query network elements.

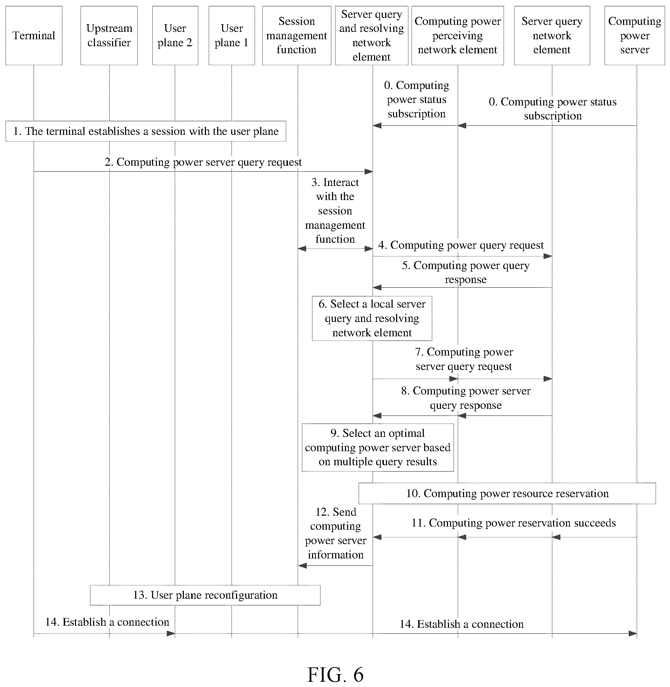

As shown in FIG. 6, specific steps are as follows:
Step 0 to step 5 are the same as step 0 to step 5 in Embodiment 1. For specific descriptions, reference may be made to Embodiment 1. Details are not described herein again.
Step 6: the server query and resolving network element selects server query and resolving network elements (for example, a local server query and resolving network element) in one or more areas according to a server query and resolving network element filtering condition (for example, a local server query and resolving network element filtering condition).

Optionally, the server query and resolving network element filtering condition includes one or more of the following:
(1) terminal location information;
(2) a computing power requirement corresponding to a computing power task and/or a service; and
(3) computing power status information of a computing power server.

Step 7 and step 8 are the same as step 6 and step 7 in Embodiment 1.

Step 9: the server query and resolving network element selects an optimal first server as a second server according to one or more server query responses (that is, according to computing power server query results fed back by the multiple local server query and resolving network elements).

It may be understood that the second server is a candidate server before a computing power resource is successfully allocated or reserved, and is the second server after the computing power resource is successfully allocated or reserved.

In an implementation, a method for selecting the second server should satisfy a requirement of query auxiliary information (refer to step 8, that is, requirements of query auxiliary information twice by an application server, to compare query results of multiple areas, and select an optimal area from the multiple areas).

Step 10 to step 14 are the same as step 8 to step 12 in Embodiment 1. For specific descriptions, reference may be made to Embodiment 1. Details are not described herein again.

Embodiment 3: a server query and resolving network element + a (local) server query and resolving network element + a (local) server query network element.

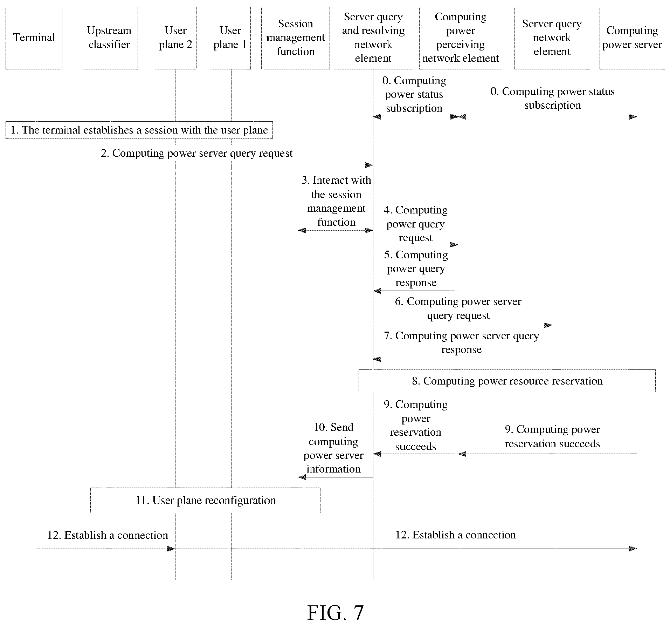

As shown in FIG. 7, specific steps are as follows:
Step 0 to step 5 and step 8 to step 12 are the same as step 0 to step 5 and step 8 to step 12 in Embodiment 1. For specific descriptions, reference may be made to Embodiment 1. Details are not described herein again.
Step 6: the server query and resolving network element sends a server query request to the server query network element (for example, a local server query network element). The server query request includes query auxiliary information.

The server query and resolving network element performs, according to the query auxiliary information, related operations for querying a computing power server.

The server query request includes at least one of the following query auxiliary information.

Optionally, the related operations for querying the computing power server include at least one of the following:
(1) confirming a first server, where the first server is a computing power server that satisfies a requirement of the query auxiliary information; and
(2) returning address information of the first server.

It may be understood that the first server is a candidate server before a computing power resource is successfully allocated or reserved, and is the first server after the computing power resource is successfully allocated or reserved.

Step 7: the server query network element (for example, the local server query network element) sends a server query response to the server query and resolving network element.

Optionally, the server query response includes index information of the first server that satisfies the query auxiliary information.

In an implementation, that the first server satisfies a requirement of the query auxiliary information of the server includes: a computing power status of the first server can support a computing power requirement of a computing power task and/or a service.

Optionally, in another implementation, that the first server satisfies a requirement of the query auxiliary information of the server includes: a computing power status of the first server can support a computing power requirement of a computing power task and/or a service; and a location of the first server satisfies a location of a terminal (for example, the first server is closest to the location of the terminal or a path between the first server and the terminal is optimal).

Different from Embodiment 1, the server query and resolving network element (for example, the local server query and resolving network element) can only query a first server that satisfies a requirement of the query auxiliary information in a coverage area of the server query network element (for example, the local server query network element). However, the first server is not necessarily globally optimal.

Embodiment 4 of the present invention: computing power resource allocation

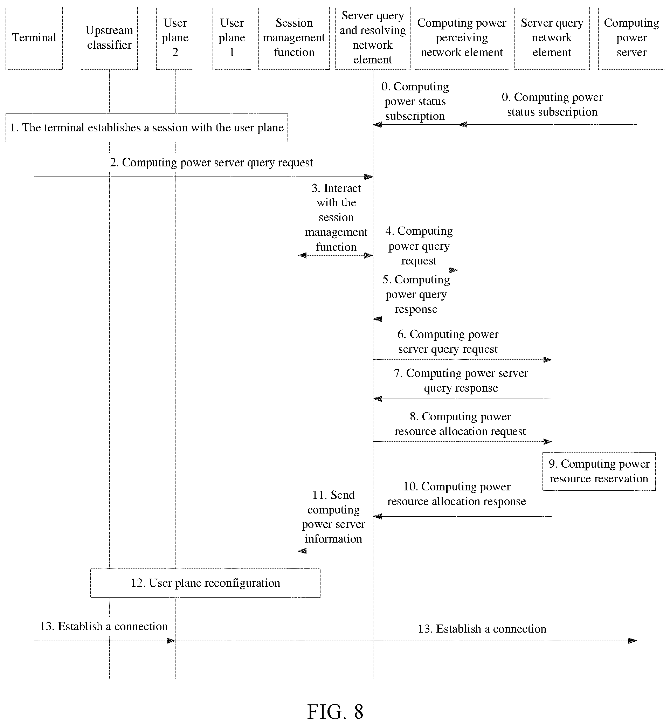

As shown in FIG. 8, specific steps are as follows:
Step 1 to step 7 are the same as step 1 to step 7 in Embodiment 1, and details are not described herein again.
Step 8: the server query and resolving network element sends a fifth request to a computing power resource allocation server.

In an implementation, the computing power resource allocation server is the selected first server.

Optionally, the fifth request includes at least one of the following:
(1) The index information of the first server (for example, an IP address, an ID, a port number, an FQDN, and a URL).

It may be understood that the first server is a candidate server before a computing power resource is successfully allocated or reserved, and is the first server after the computing power resource is successfully allocated or reserved.

(2) A computing power resource requirement of a computing power task.

(3) The computing power resource requirement information.

In an implementation, the computing power resource allocation server is not the selected first server. In this case, the computing power resource allocation server finds the first server by using the index information of the first server, and sends the fifth request to the first server.

It may be understood that the first server is a candidate server before a computing power resource is successfully allocated or reserved, and is the first server after the computing power resource is successfully allocated or reserved.

Step 9: the computing power resource allocation server sends the fifth request to the computing power server.

Step 10: the computing power resource allocation server sends a computing power resource allocation response (that is, a response message of the fifth message) to the server query and resolving network element.

In an implementation manner, if a computing power resource is successfully allocated, step 11 is performed.

In another implementation, if the computing resource fails to be allocated, step 4 to step 10 are repeatedly performed.

Step 11 to step 13 are the same as step 10 to step 12 in Embodiment 1.

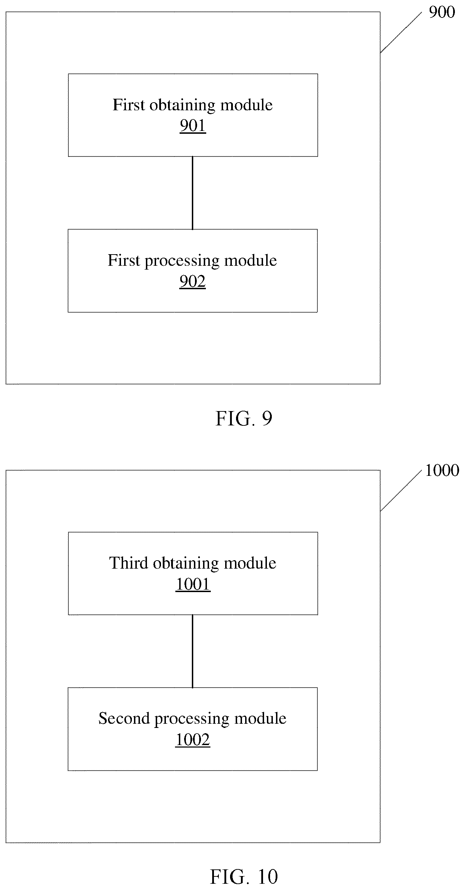

As shown in FIG. 9, an embodiment of this application provides an information processing apparatus, and the apparatus 900 includes:
a first obtaining module 901, configured to obtain description information of a computing power task and/or description information of a service; and
a first processing module 902, configured to perform a first operation according to the description information of the computing power task and/or the description information of the service, where the first operation includes at least one of the following:
   determining a first request; and
   sending the first request; where
   the first request is used to request computing power requirement information of the computing power task and/or computing power requirement information of the service; and
   the first request includes the description information of the computing power task and/or the description information of the service.

In this implementation of this application, the first operation is performed when a first condition is satisfied, and the first condition includes at least one of the following:
that a second request is obtained, where the second request is used to request to query a computing power server; and
that a third request is obtained, where the third request is used to request to allocate computing power to the computing power task and/or the service.

In this embodiment of this application, the first operation further includes at least one of the following:
obtaining the computing power requirement information of the computing power task and/or the computing power requirement information of the service;
determining a fourth request according to the computing power requirement information of the computing power task and/or the computing power requirement information of the service, where the fourth request is used to request to query a computing power server; and
sending the fourth request; where
the fourth request includes at least one of the following:
   the computing power requirement information of the computing power task and/or the computing power requirement information of the service;
   terminal location information;
   network-selected user plane information; and
   DNAI information.

In this embodiment of this application, the apparatus further includes:
a second obtaining module, configured to obtain computing power status information; where
the computing power status information includes at least one of the following:
   a computing power remaining status or a computing power available status (for example, available computing power);
   total computing power;
   a computing power use status (for example, a computing power use ratio);
   a predicted future computing power use status; and
   a computing power use status in a predetermined period of time (for example, a period of time in the past).

In this embodiment of this application, the first operation further includes:
obtaining index information of a first server from a device that previously sent a second query request; and
sending the index information of the first server to a second communication device.

In this embodiment of this application, the first server satisfies at least one of the following:
that the first server satisfies the second request or the fourth request;
that the first server satisfies a fifth request, where the fifth request is used to request to allocate or reserve a computing power resource for the computing power task and/or the service;
that a physical distance between the first server and a second communication device is the shortest;
that a routing distance between the first server and the second communication device is the shortest or a delay between the first server and the second communication device is the smallest; and
that an available computing power status of the first server can satisfy the computing power requirement information of the computing power task and/or the computing power requirement information of the service.

In this embodiment of this application, the fifth request includes at least one of the following:
index information of a candidate server;
a resource allocation request identifier;
a computing power resource status occupied in the request;
computing power task completion time and/or service completion time;
computing power task start time and/or service start time; and
the description information of the computing power task and/or the description information of the service.

The apparatus provided in this embodiment of this application can implement each process implemented in the method embodiment of FIG. 1, and a same technical effect is achieved. To avoid repetition, details are not described herein again.

As shown in FIG. 10, an embodiment of this application provides an information processing apparatus, and the apparatus 1000 includes:
a third obtaining module 1001, configured to obtain first information, where the first information includes at least one of the following: a fourth request used to request to query a computing power server, and computing power status information of the server; and
a second processing module 1002, configured to perform a second operation according to the first information; where
the second operation includes at least one of the following:
   querying a first server according to the fourth request;
   determining a fifth request, where the fifth request is used to request to allocate or reserve a computing power resource for a computing power task and/or a service; and
   sending the fifth request; where
   the fourth request includes at least one of the following:
      computing power requirement information of the computing power task and/or computing power requirement information of the service;
      terminal location information;
      network-selected user plane information; and
      DNAI information.

In this implementation of this application, the second operation further includes: sending index information of the first server to a second communication device.

In this embodiment of this application, the first server satisfies at least one of the following:
(1) that the first server satisfies the fourth request;
(2) that the first server satisfies the fifth request;
(3) that a physical distance between the first server and a first communication device is the shortest; and
(4) that a routing distance between the first server and the first communication device is the shortest or a delay between the first server and the first communication device is the smallest.

In this embodiment of this application, that the first server satisfies the fourth request includes at least one of the following:
that the first server satisfies the computing power requirement information of the computing power task and/or the computing power requirement information of the service; and
that a resource allocation request is sent to the first server, and a computing power resource allocation success response returned by the first server is obtained;
   and/or
that the first server can satisfy the fifth request includes:
   that a resource allocation request is sent to the first server, and a computing power resource allocation success response returned by the first server is obtained.

In this embodiment of this application, the fifth request includes at least one of the following:
index information of a candidate server;
a resource allocation request identifier;
a computing power resource status occupied in the request;
computing power task completion time and/or service completion time;
computing power task start time and/or service start time; and
the description information of the computing power task and/or the description information of the service.

The apparatus provided in this embodiment of this application can implement each process implemented in the method embodiment of FIG. 2, and a same technical effect is achieved. To avoid repetition, details are not described herein again.

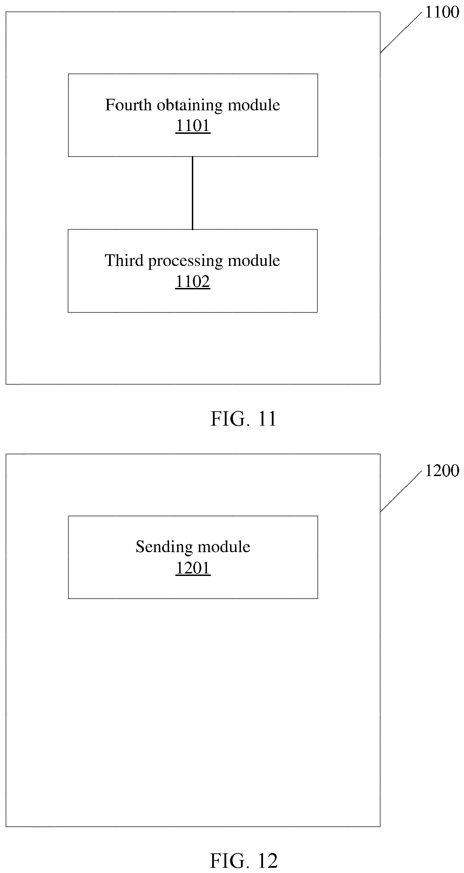

As shown in FIG. 11, an embodiment of this application provides an information processing apparatus, and the apparatus 1100 includes:
a fourth obtaining module 1101, configured to obtain a fifth request, where the fifth request is used to request to allocate or reserve a computing power resource for a computing power task and/or a service; and
a third processing module 1102, configured to perform a third operation according to the fifth request; where
the third operation includes at least one of the following:
   reserving or allocating a computing power resource of a candidate server; and
   sending a response to the fifth request.

In this embodiment of this application, the fifth request includes at least one of the following:
index information of a candidate server;
a resource allocation request ID;
a computing power resource status occupied in the request;
computing power task completion time and/or service completion time;
computing power task start time and/or service start time; and
the description information of the computing power task and/or the description information of the service.

The apparatus provided in this embodiment of this application can implement each process implemented in the method embodiment of FIG. 3, and a same technical effect is achieved. To avoid repetition, details are not described herein again.

As shown in FIG. 12, an embodiment of this application provides an information processing apparatus, and the apparatus 1200 includes:
a sending module 1201, configured to send a second request, where the second request is used to request to query a computing power server, and the second request includes description information of a computing power task and/or description information of a service.

The apparatus provided in this embodiment of this application can implement each process implemented in the method embodiment of FIG. 4, and a same technical effect is achieved. To avoid repetition, details are not described herein again.

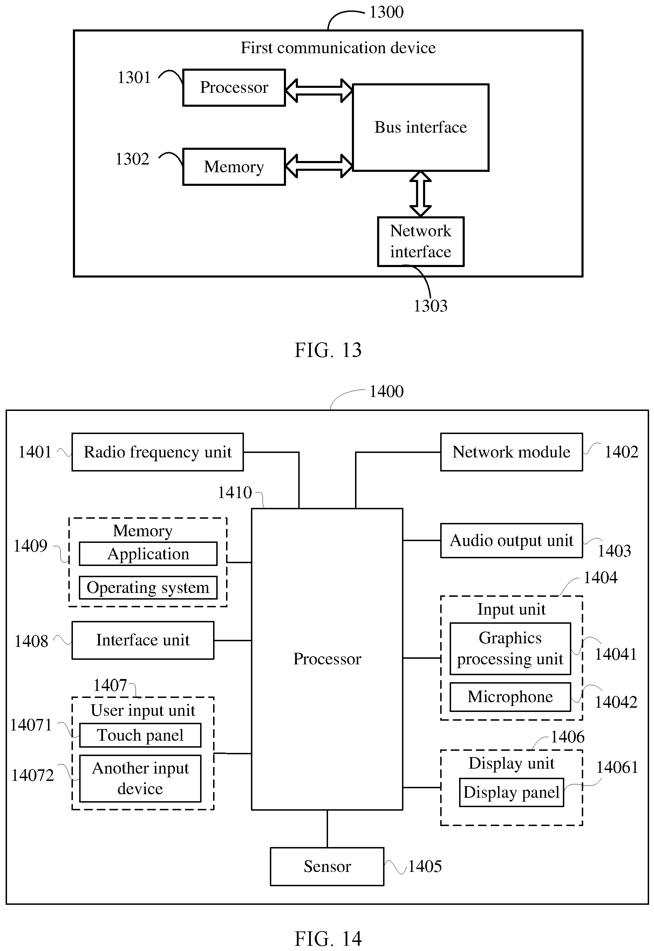

An embodiment of this application further provides a first communication device. As shown in FIG. 13, the first communication device 1300 includes a processor 1301, a memory 1302, and a network interface 1303.

Specifically, the processor 1301 invokes an instruction or a program in the memory 1302 to perform the methods performed by the modules shown in FIG. 9 and FIG. 10, and a same technical effect is achieved. To avoid repetition, details are not described herein again.

FIG. 14 is a schematic diagram of a hardware structure of a second communication device for implementing embodiments of this application. The second communication device 1400 includes but is not limited to components such as a radio frequency unit 1401, a network module 1402, an audio output unit 1403, an input unit 1404, a sensor 1405, a display unit 1406, a user input unit 1407, an interface unit 1408, a memory 1409, and a processor 1410.

It may be understood by a person skilled in the art that the terminal 1400 may further include a power supply (such as a battery) that supplies power to each component. The power supply may be logically connected to the processor 1410 by using a power management system, to implement functions such as charging, discharging, and power consumption management by using the power management system. A structure of the terminal shown in FIG. 14 does not constitute a limitation on the terminal device, and may include more or fewer parts than those shown in the figure, or combine some parts, or have different part arrangements. Details are not described herein again.

It should be understood that, in this embodiment of this application, the input unit 1404 may include a graphics processing unit (Graphics Processing Unit, GPU) 14041 and a microphone 14042. The graphics processing unit 14041 processes image data of a static picture or a video obtained by an image capture apparatus (such as a camera) in a video capture mode or an image capture mode. The display unit 1406 may include a display panel 14061, and the display panel 14061 may be configured in a form of a liquid crystal display, an organic light emitting diode, or the like. The user input unit 1407 includes a touch panel 14071 and another input device 14072. The touch panel 14071 is also referred to as a touchscreen. The touch panel 14071 may include two parts: a touch detection apparatus and a touch controller. The another input device 14072 may include but is not limited to one or more of a physical keyboard, a function key (such as a volume control key or an on/off key), a trackball, a mouse, a joystick, and the like. Details are not described herein.

In this embodiment of this application, after receiving downlink data from a network side device, the radio frequency unit 1401 sends the downlink data to the processor 1410 for processing, and sends uplink data to the network side device. Generally, the radio frequency unit 1401 includes but is not limited to an antenna, at least one amplifier, a transceiver, a coupler, a low noise amplifier, a duplexer, and the like.

The memory 1409 may be configured to store a software program or an instruction and various data. The memory 1409 may mainly include a storage program or instruction area and a storage data area, where the storage program or instruction area may store an operating system, an application program or an instruction required by at least one function (such as a sound play function or an image play function), and the like. In addition, the memory 1409 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, a flash memory device, or another non-volatile solid-state storage device.

The processor 1410 may include one or more processing units. Optionally, the processor 1410 may be integrated with an application processor and a modem processor. The application processor mainly processes an operating system, a user interface, an application program or an instruction, and the like, and the modem processor mainly processes wireless communication, for example, a baseband processor. It may be understood that the modem processor may also not be integrated into the processor 1410.

The second communication device provided in this embodiment of this application can implement each process implemented in the method embodiment of FIG. 3, and a same technical effect is achieved. To avoid repetition, details are not described herein again.

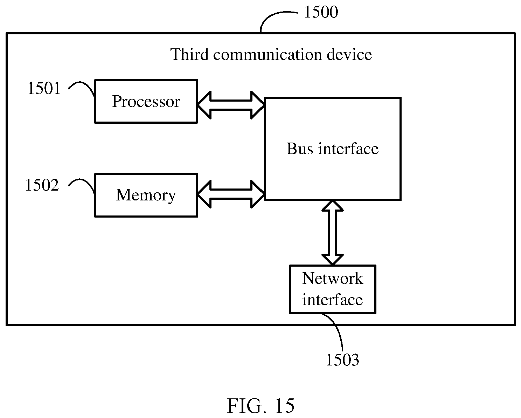

An embodiment of this application further provides a third communication device. As shown in FIG. 15, the third communication device 1500 includes a processor 1501, a memory 1502, and a network interface 1503.

Specifically, the processor 1501 invokes an instruction or a program in the memory 1502 to perform the methods performed by the modules shown in FIG. 11, and a same technical effect is achieved. To avoid repetition, details are not described herein again.

An embodiment of this application further provides a program product. The program product is stored in a non-volatile storage medium, and the program product is executed by at least one processor to implement steps of the processing methods described in FIG. 1 to FIG. 4.

An embodiment of this application further provides a readable storage medium. A program or an instruction is stored in the readable storage medium. When the program or the instruction is executed by a processor, the processes of the method embodiment in FIG. 1 to FIG. 4 can be implemented, and a same technical effect can be achieved. To avoid repetition, details are not described herein.

The processor is a processor in the terminal in the foregoing embodiment. The readable storage medium includes a computer-readable storage medium such as a read-only memory (Read-Only Memory, ROM), a random access memory (Random Access Memory, RAM), a magnetic disk, an optical disc, or the like.

An embodiment of this application further provides a chip. The chip includes a processor and a communication interface, the communication interface is coupled to the processor, and the processor is configured to run a program or an instruction of a network side device to implement the processes of the method embodiments shown in FIG. 2, and a same technical effect can be achieved. To avoid repetition, details are not described herein again.

It should be understood that the chip mentioned in this embodiment of this application may also be referred to as a system-level chip, a system chip, a chip system, or a system on a chip.

It should be noted that in this specification, the term "include", "including", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. In the absence of more restrictions, an element defined by the statement "including a..." does not exclude another same element in a process, method, article, or apparatus that includes the element. In addition, it should be noted that a scope of the method and the apparatus in the embodiments of this application is not limited to: performing a function in a sequence shown or discussed, and may further include: performing a function in a basically simultaneous manner or in a reverse sequence based on an involved function. For example, the described method may be performed in a different order, and various steps may be added, omitted, or combined. In addition, features described with reference to some examples may be combined in other examples.

According to the descriptions of the foregoing implementations, a person skilled in the art may clearly understand that the foregoing method embodiments may be implemented by using software and a required universal hardware platform, or certainly may be implemented by using hardware. However, in many cases, the former is a better implementation. Based on such an understanding, the technical solutions of this application essentially or the part contributing to existing technologies may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, or a network device) to execute the methods described in the embodiments of this application.

The embodiments of this application are described with reference to the accompanying drawings. However, this application is not limited to the foregoing specific implementations. The foregoing specific implementations are merely examples, but are not limiting. A person of ordinary skill in the art may make many forms without departing from the objective and the scope of the claims of this application, and these forms all fall within the protection scope of this application.

## Claims

1. An information processing method, performed by a first communication device and comprising:
obtaining description information of a computing power task and/or description information of a service; and
performing a first operation according to the description information of the computing power task and/or the description information of the service, wherein the first operation comprises at least one of the following:
determining a first request; and
sending the first request; wherein
the first request is used to request computing power requirement information of the computing power task and/or computing power requirement information of the service; and
the first request comprises the description information of the computing power task and/or the description information of the service.

2. The method according to claim 1, wherein the first operation is performed when a first condition is satisfied, and the first condition comprises at least one of the following:
that a second request is obtained, wherein the second request is used to request to query a computing power server; and
that a third request is obtained, wherein the third request is used to request to allocate computing power to the computing power task and/or the service.

3. The method according to claim 1, wherein after the step of sending the first request, the first operation further comprises at least one of the following:
obtaining the computing power requirement information of the computing power task and/or the computing power requirement information of the service;
determining a fourth request according to the computing power requirement information of the computing power task and/or the computing power requirement information of the service, wherein the fourth request is used to request to query a computing power server; and
sending the fourth request; wherein
the fourth request comprises at least one of the following:
the computing power requirement information of the computing power task and/or the computing power requirement information of the service;
terminal location information;
network-selected user plane information; and
data network access identifier DNAI information.

4. The method according to claim 1, wherein the method further comprises:
obtaining computing power status information; wherein
the computing power status information comprises at least one of the following:
a computing power remaining status or a computing power available status;
total computing power;
a computing power use status;
a predicted future computing power use status; and
a computing power use status in a predetermined period of time.

5. The method according to claim 1, wherein the first operation further comprises:
obtaining index information of a first server; and
sending the index information of the first server.

6. The method according to claim 5, wherein the first server satisfies at least one of the following:
that the first server satisfies the second request or the fourth request;
that the first server satisfies a fifth request, wherein the fifth request is used to request to allocate or reserve a computing power resource for the computing power task and/or the service;
that a physical distance between the first server and a second communication device is the shortest;
that a routing distance between the first server and the second communication device is the shortest or a delay between the first server and the second communication device is the smallest; and
that an available computing power status of the first server can satisfy the computing power requirement information of the computing power task and/or the computing power requirement information of the service.

7. The method according to claim 6, wherein the fifth request comprises at least one of the following:
index information of a candidate server;
a resource allocation request identifier;
a computing power resource status occupied in a request;
computing power task completion time and/or service completion time;
computing power task start time and/or service start time; and
the description information of the computing power task and/or the description information of the service.

8. An information processing method, performed by a first communication device and comprising:
obtaining first information, wherein the first information comprises at least one of the following: a fourth request used to request to query a computing power server, and computing power status information of a server; and
performing a second operation according to the first information; wherein
the second operation comprises at least one of the following:
querying a first server according to the fourth request;
determining a fifth request, wherein the fifth request is used to request to allocate or reserve a computing power resource for a computing power task and/or a service; and
sending the fifth request; wherein
the fourth request comprises at least one of the following:
computing power requirement information of the computing power task and/or computing power requirement information of the service;
terminal location information;
network-selected user plane information; and
DNAI information.

9. The method according to claim 8, wherein the second operation further comprises:
sending index information of a first server.

10. The method according to claim 9, wherein
the first server satisfies at least one of the following:
that the first server satisfies the fourth request;
that the first server satisfies the fifth request;
that a physical distance between the first server and the first communication device is the shortest; and
that a routing distance between the first server and the first communication device is the shortest or a delay between the first server and the first communication device is the smallest.

11. The method according to claim 10, wherein that the first server satisfies the fourth request comprises at least one of the following:
that the first server satisfies the computing power requirement information of the computing power task and/or the computing power requirement information of the service;
that a resource allocation request is sent to the first server, and a computing power resource allocation success response returned by the first server is obtained;
and/or
that the first server can satisfy the fifth request comprises:
that a resource allocation request is sent to the first server, and a computing power resource allocation success response returned by the first server is obtained.

12. The method according to claim 10, wherein the fifth request comprises at least one of the following:
index information of a candidate server;
a resource allocation request identifier;
a computing power resource status occupied in a request;
computing power task completion time and/or service completion time;
computing power task start time and/or service start time; and
description information of the computing power task and/or description information of the service.

13. An information processing method, performed by a third communication device and comprising:
obtaining a fifth request, wherein the fifth request is used to request to allocate or reserve a computing power resource for a computing power task and/or a service; and
performing a third operation according to the fifth request; wherein
the third operation comprises at least one of the following:
reserving or allocating a computing power resource of a candidate server; and
sending a response message of the fifth request.

14. The method according to claim 13, wherein the fifth request comprises at least one of the following:
index information of the candidate server;
a resource allocation request ID;
a computing power resource status occupied in a request;
computing power task completion time and/or service completion time;
computing power task start time and/or service start time; and
description information of the computing power task and/or description information of the service.

15. An information processing method, performed by a second communication device and comprising:
sending a second request, wherein the second request is used to request to query a computing power server, and
the second request comprises description information of a computing power task and/or description information of a service.

16. An information processing apparatus, comprising:
a first obtaining module, configured to obtain description information of a computing power task and/or description information of a service; and
a first processing module, configured to perform a first operation according to the description information of the computing power task and/or the description information of the service, wherein the first operation comprises at least one of the following:
determining a first request; and
sending the first request; wherein
the first request is used to request computing power requirement information of the computing power task and/or computing power requirement information of the service; and
the first request comprises the description information of the computing power task and/or the description information of the service.

17. An information processing apparatus, comprising:
a third obtaining module, configured to obtain first information, wherein the first information comprises at least one of the following: a fourth request used to request to query a computing power server, and computing power status information of a server; and
a second processing module, configured to perform a second operation according to the first information; wherein
the second operation comprises at least one of the following:
querying a first server according to the fourth request;
determining a fifth request, wherein the fifth request is used to request to allocate or reserve a computing power resource for a computing power task and/or a service; and
sending the fifth request; wherein
the fourth request comprises at least one of the following:
computing power requirement information of the computing power task and/or computing power requirement information of the service;
terminal location information;
network-selected user plane information; and
DNAI information.

18. An information processing apparatus, comprising:
a fourth obtaining module, configured to obtain a fifth request, wherein the fifth request is used to request to allocate or reserve a computing power resource for a computing power task and/or a service; and
a third processing module, configured to perform a third operation according to the fifth request; wherein
the third operation comprises at least one of the following:
reserving or allocating a computing power resource of a candidate server; and
sending a response message of the fifth request.

19. An information processing apparatus, comprising:
a sending module, configured to send a second request, wherein the second request is used to request to query a computing power server, and the second request comprises description information of a computing power task and/or description information of a service.

20. A first communication device, comprising: a processor, a memory, and a program stored in the memory and executable on the processor, wherein when the program is executed by the processor, steps in the method according to any one of claims 1 to 12 are implemented.

21. A second communication device, comprising: a processor, a memory, and a program stored in the memory and executable on the processor, wherein when the program is executed by the processor, steps in the method according to claim 15 are implemented.

22. A third communication device, comprising: a processor, a memory, and a program stored in the memory and executable on the processor, wherein when the program is executed by the processor, steps in the method according to either of claims 13 and 14 are implemented.

23. A readable storage medium, wherein the readable storage medium stores a program or an instruction, and when the program or the instruction is executed by a processor, steps in the method according to any one of claims 1 to 15 are implemented.

24. A chip, wherein the chip comprises a processor and a communication interface, the communication interface is coupled to the processor, and the processor is configured to run a program or an instruction, to implement steps in the method according to any one of claims 1 to 15.

25. A program product, wherein the program product is stored in a non-volatile storage medium, and the program product is executed by at least one processor to implement steps in the method according to any one of claims 1 to 15.
